# EUROPEAN PATENT APPLICATION

(11) **EP 4 155 239 A1**
(43) Date of publication of application: **29.03.2023**
(21) Application number: 21807674.3
(22) Date of filing: 01.02.2021
(51) Int. Cl.: B65G 17/32, B65G 19/02, B67C 7/00, B08B 9/20

(54) **DRAINAGE PAN**

(30) Priority: 22.05.2020 JP 2020089859; 22.05.2020 JP 2020089860; 22.05.2020 JP 2020089861
(71) Applicant: Toyo Seikan Group Engineering Co., Ltd., Yokohama-shi, Kanagawa 230-0001 (JP)
(72) Inventor: HARA Yuichi, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2021/003447
(87) International publication number: WO 2021/235011

(57) **Abstract**

To provide a simple-structured drain pan that can quickly collect waste liquid without causing the waste liquid falling down onto the drain pan to be stopped by a fixed part of a production machine. The drain pan (100) provided on an upper surface of a pedestal (B) of a production machine (S) is composed of at least two slopes (111), with a drain hole (113) provided at a lowest point of the slopes (111) for discharging waste liquid flowing down from the production machine (S), and a wall (110) standing upright along outer peripheral edges of the drain pan (100).

## Description

### [Technical Field]

The present invention relates to a waste liquid drain pan for collecting waste water or liquids generated in cleaning operations such as cleaning and sterilization of container filling equipment, and more particularly to a drain pan provided on an upper surface of a pedestal on which a production machine of container filling equipment is fixed, the pan having a drain hole for discharging waste liquids that drop down from the production machine and are collected on the pan.

### [Background Art]

Container filling equipment is generally known to have a system for discharging waste liquids generated in cleaning operations for cleaning containers or production machines using steam or sterilizing water to the outside.

For example, Patent Literature 1 describes a clean booth sterilizing structure for a sterile filling system.

This clean booth sterilizing structure for a sterile filling system described in Patent Literature 1 includes a clean booth that can accommodate a beverage filling machine or can seaming machine. In an upper area inside the clean booth, there are provided a sanitary piping system for spraying chemical solutions or cleaning water onto the surfaces of the can seaming machine or inner surfaces of the clean booth, or a superheated steam piping system for shooting heated steam toward the surroundings of the can seaming machine body and the seaming work area.

Inside this clean booth are provided a partition wall for separating the upper area from a lower area, and a drainage mechanism for collecting and discharging waste liquids to the outside. The drainage mechanism is composed of drain pipes for discharging waste liquids to the outside from a receptacle provided in the partition wall for collecting the waste liquids.

Not just for sterile filling but generally, drain pans are used to catch waste liquids flowing down from a production machine in container filling equipment such as a beverage filling machine or can seaming machine, wherein a drain hole is disposed in a pan provided on an upper surface of a pedestal on which the production machine is fixed, for the waste liquids to be directly discharged therefrom.

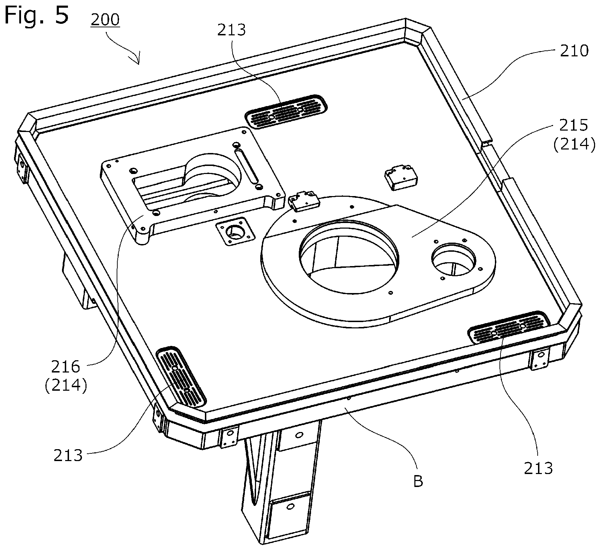

A plurality of drain holes may be provided in such a drain pan as shown in Fig. 5 so that waste liquids dropping down on the drain pan can be discharged from the nearest drain hole.

### [Citation List]

### [Patent Literature]

[Patent Literature 1] Japanese Patent Application Publication No. 2003-88823

### [Summary of Invention]

### [Technical Problem]

The drainage mechanism and drain pan described in Patent Literature 1 still have some scope of improvement.

Namely, the drainage mechanism and drain pan described in Patent Literature 1 have an issue with waste liquids dropping down on the drain pan not reaching the drain hole and staying on the drain pan in the case where the upper surface of the drain pan is set horizontal.

Even if cleaning and sterilization are performed correctly before production, such cleaning waste liquids as well as fluids leaking from the products or lubricating oil oozing from the machines left on the pan as residual liquids at the start of or during production could create germ beds and cause significant quality issues.

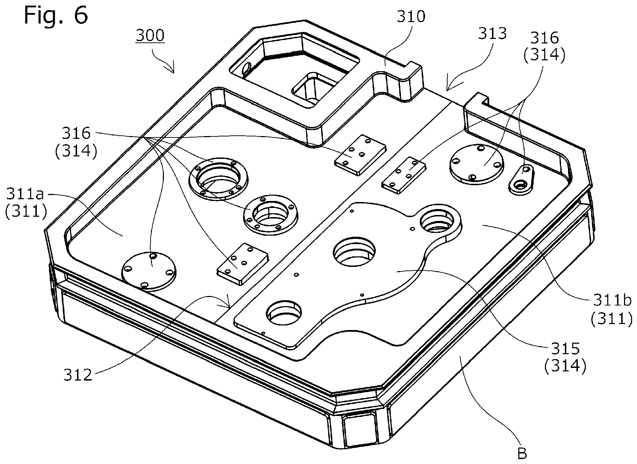

A multi-slope configuration would be conceivable, in which the drain pan is divided by an inward fold extending along the direction of inclination as shown in Fig. 6, i.e., the entire upper surface of the drain pan is formed as mild slopes in directions toward a drain hole, so as to cause waste liquids received on the drain pan to flow along the inward fold toward the drain hole. This configuration, however, will pose limitations on the position, shape, and size of mounting seats for fixing a production machine because such seats provided on the inward fold could stop the flow of waste liquids.

The present invention solves the above problem and aims at providing a simple-structured drain pan that can quickly collect waste liquid without causing the waste liquid received on the drain pan to be stopped by a fixed part such as a mounting seat of a production machine.

### [Solution to Problem]

The drain pan according to the present invention is a drain pan provided on an upper surface of a pedestal of a production machine in container filling equipment, the drain pan being composed of at least two slopes and provided with a drain hole at a lowest point of the slopes for discharging waste liquid flowing down from the production machine, and a wall standing upright along outer peripheral edges of the pan, to solve the above problem.

### [Advantageous Effects of Invention]

The drain pan according to claim 1 is composed of at least two slopes and provided with a drain hole at a lowest point of the slopes, which allows waste liquid dropping down on the upper surface of the drain pan to flow down on each slope, ensuring that the waste liquid reaches the drain hole and can exit.

A mounting seat for fixing a base part of a production machine on the pedestal may be disposed at a highest point of the slopes, for example, to make sure that waste liquid dropping down from the mounting seat onto the upper surface of the drain pan will flow down on each slope without being stopped by the mounting seat. This way, waste liquid never fails to reach the drain hole, and therefore can be discharged.

According to the configuration set forth in claim 2, the plurality of slopes are each inclined downward from an adjacent slope toward the drain hole. There is no spot on the drain pan where the waste liquid may be stopped, and therefore the waste liquid can be quickly directed toward the drain hole.

According to the configuration set forth in claim 3, the plurality of slopes are divided by a ridgeline that is formed by an outward fold. Therefore, by attaching a mounting seat such as to abut on the ridgeline or to be located on the ridgeline, for example, it is ensured that the waste liquid on the drain pan will flow down on one of the slopes without making a pool on the slopes. Thus the waste liquid can be divided and directed toward the drain hole located at a lowest point of each slope.

According to the configuration set forth in claim 4, the mounting seat includes one that is disposed to extend over the ridgeline. Therefore, it is ensured that the waste liquid flowing down from the production machine fixed to the mounting seat that is disposed to extend over the ridgeline will not be stopped by the mounting seat and drop down on one of the slopes. Thus the waste liquid is reliably directed toward the drain hole.

According to the configuration set forth in claim 5, the mounting seat has an outer side that does not form a concave shape facing the ridgeline where the mounting seat is disposed. There is no spot where the waste liquid may be trapped by an outer side of the mounting seat and the slope, and therefore the waste liquid can be reliably directed toward the drain hole.

According to the configuration set forth in claim 6, the ridgeline is not parallel to any surface of the wall. The waste liquid that flows down the slopes and reaches the wall flows along the wall toward the drain hole located at the lowest point of the slopes. Since there is no need to provide wide drain holes, an increase in cost can be minimized.

According to the configuration set forth in claim 7, the plurality of slopes have an inclination angle of 3 degrees or more. A correct slope for drainage can therefore be set so that the waste liquid can flow down on the slopes and reach the drain hole more reliably.

### [Brief Description of Drawings]

[Fig. 1] Fig. 1 is a schematic diagram illustrating one example of container filling equipment S having a drain pan 100 according to one embodiment of the present invention.
[Fig. 2] Fig. 2 is a perspective view of the drain pan 100 according to one embodiment of the present invention.
[Fig. 3] Fig. 3 is a top plan view of the drain pan 100 according to one embodiment of the present invention.
[Fig. 4] Fig. 4 is an enlarged top plan view illustrating an example of arrangement of peripheral mounting seats 116 of the drain pan 100 according to one embodiment of the present invention.
[Fig. 5] Fig. 5 is a perspective view illustrating an example of drain pan 200 for reference.
[Fig. 6] Fig. 6 is a perspective view illustrating an example of drain pan 300 for reference.

### [Description of Embodiment]

A drain pan 100 according to one embodiment of the present invention is described below with reference to the drawings.

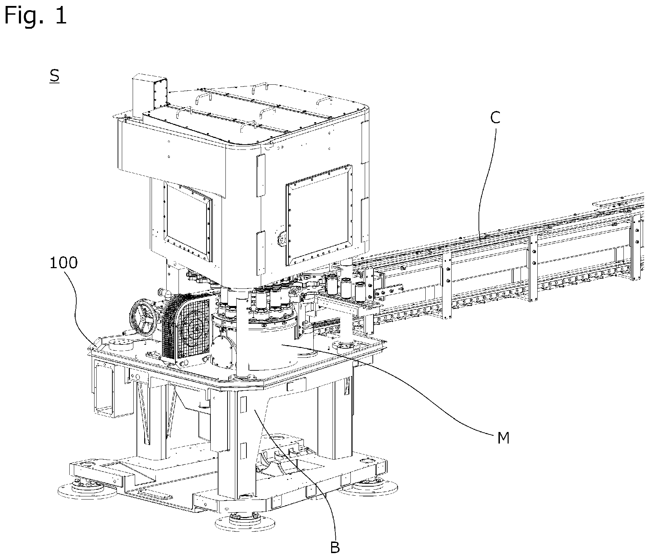

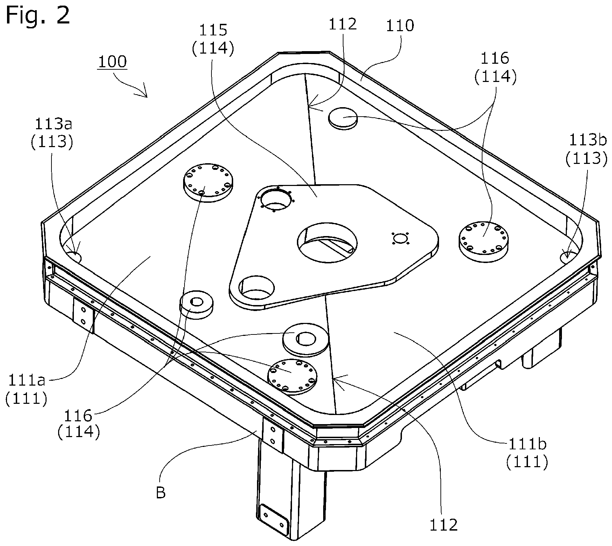

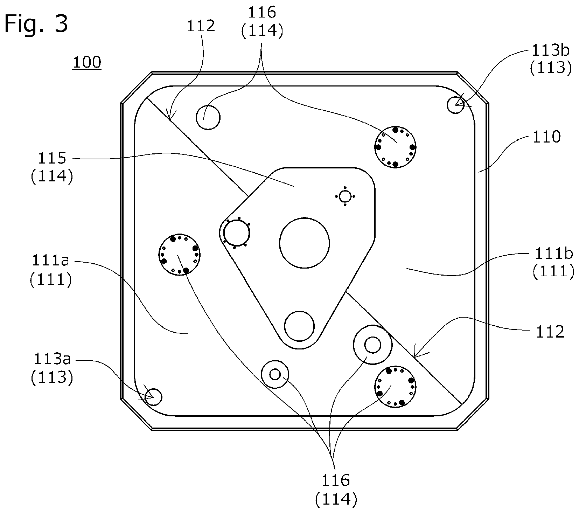

As shown in Fig. 1, the drain pan 100 is provided on the upper surface of a pedestal B on which a production machine M of container filling equipment S is fixed, and includes, as shown in Fig. 2 and Fig. 3, mounting seats 114 (main mounting seat 115 and peripheral mounting seats 116) for fixedly attaching a base part of the production machine M, drain holes 113 (first drain hole 113a and second drain hole 113b) or discharge outlets connected to a water service pipe or the like, and a wall 110 standing upright from outer peripheral edges.

Two slopes 111 (first slope 111a and second slope 111b) are formed on the upper surface of the drain pan 100. The first slope 111a is inclined downward toward the first drain hole 113a, and the second slope 111b is inclined downward toward the second drain hole 113b.

The inclination angle of the slopes 111 may be set suitably for drainage of general cleaning and sterilizing liquids or tap water. The results of exploration by the inventors and empirical values applicable to cleaning and sterilizing liquids that have been in use in recent years both show that the slope for drainage should preferably be 3 degrees or more relative to the horizontal.

The first slope 111a and second slope 111b are arranged as an outward fold such as to form a ridge or ridgeline 112 therebetween that serves as a divide.

The main mounting seat 115 on which a main section of the production equipment sits is disposed to extend over the ridgeline 112, i.e., at the highest point of the slopes.

The main mounting seat 115 need not necessarily be disposed to extend over the ridgeline 112 and may be positioned such that part of the outer peripheral edges of the main mounting seat 115 abuts on the ridgeline 112.

The peripheral mounting seats 116 can have a cross section with any of circular, rectangular, polygonal, or freecurved outer contours. Whatever shape they may have, the peripheral mounting seats are arranged such as not to be concave toward the ridgeline, so as not to form an unwanted pool of liquid.

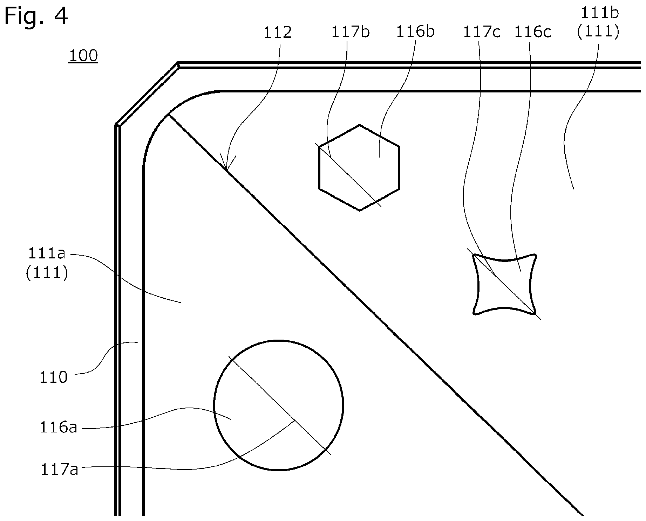

Namely, the peripheral mounting seats 116 include, for example, a first peripheral mounting seat 116a, a second peripheral mounting seat 116b, and a third peripheral mounting seat 116c as shown in Fig. 4, and their outer sides are each shaped and disposed such as to gradually extend toward both ends of a widest portion connected by a parallel line 117 (first parallel line 117a, second parallel line 117b, third parallel line 117c) from a point nearest to the ridgeline 112 toward a point widest along a direction parallel to the ridgeline 112.

None of the wall surfaces of the wall 110 is parallel to the ridgeline 112 so as not to form any horizontal part that will hinder the flow of waste liquid in a joint part between the wall 110 and the outer peripheral edge of the drain pan 100 where it stands upright.

This does not apply to detailed design features such as chamfers that are not considered as a main shape.

Next, the waste liquid discharge procedure with the drain pan 100 according to one embodiment of the present invention is described below with reference to Fig. 2 and Fig. 3.

Cleaning liquids from the production machine M fixed to the main mounting seat 115 or an excess of liquid content overflowing from containers drop down onto the slopes 111.

If the upper surface of the main mounting seat 115 is positioned higher than the ridgeline 112, the waste liquid falling down onto the slopes 111 will not stay on the main mounting seat 115 and quickly flow toward the drain holes 113.

Since the main mounting seat 115 is disposed such as to abut on or extend over the ridgeline 112, the waste liquid dropping down on the first slope 111a and the second slope 111b will flow down on the respective slopes 111 toward the first drain hole 113a and second drain hole 113b, respectively.

The waste liquid may come into contact with the peripheral mounting seats 116, but the peripheral mounting seats 116 are formed in a columnar shape so that the waste liquid will not be stopped by the peripheral mounting seats 116 and flow down on the slopes 111.

Since the ridgeline 112 and the wall 110 are not parallel, i.e., the inclining direction of the slopes 111 is not perpendicular to the wall 110, there is no horizontal part where the waste liquid may stagnate on the drain pan 100. Therefore, in the case where the waste liquid flowing down on the slopes 111 contacts the wall 110, the waste liquid keeps flowing along the wall 110 toward the drain hole 113 and is discharged to the outside.

It is not necessary to form the wall 110 such that none of its detailed features is parallel to the ridgeline 112. For example, a short stretch of surrounding part of the wall 110 near a drain hole 113 provided in a rounded end part of the drain pan 100 being parallel to the ridgeline 112 will not pose any problem. That is to say, when the drain pan 100 has an outer peripheral edge of a circular shape, a short stretch of the wall may be parallel to the ridgeline 112.

The waste liquid flowing down from the production machine M fixed on the peripheral mounting seats 116 flows down on the slopes 111 where respective peripheral mounting seats 116 are provided and is discharged to the outside from the drain holes 113.

Thus the waste liquid is collected to respective lowest positions of the slopes 111 (first slope 111a and second slope 111b) on the drain pan 100, and by providing each drain hole 113 (first drain hole 113a and second drain hole 113b) to each slope 111 (first slope 111a and second slope 111b), the waste liquid dropping down on the drain pan 100 can be quickly and reliably discharged to the outside from the drain holes 113 (113a and 113b).

A drain hole 113 may be provided at least at one location in the lowest position of each slope 111 (first slope 111a and second slope 111b), i.e., at a minimum of two locations for waste liquid discharge. The area where drain holes 113 are formed can thus be reduced and the installation cost of drain holes 113 is therefore reduced. Moreover, the drain holes 113 need not be wide, and therefore a drop in strength of the upper surface of the drain pan 100 by providing wide drain holes can be minimized.

As described above, according to the present invention, no liquids, including not only the cleaning waste liquids but also fluids leaking from the products or lubricating oil oozing from the machines, are left on the drain pan as residual liquids at the start of or during production but are discharged. Therefore, after correctly performing cleaning and sterilization before production, there are no worries of germ beds being created and of serious quality issues happening.

While one embodiment of the present invention has been described above in detail, the present invention is not limited to the embodiment described above. Various design changes may be made without departing from the scope of the claims set forth in the claims.

While the peripheral mounting seats in the above embodiment are described as being formed in a columnar shape, the peripheral mounting seats are not limited to columnar shapes and may be shaped in any way as long as the outer side gradually extends toward a line connecting both ends of a widest portion from a point nearest to the ridgeline toward a point widest along a direction parallel to the ridgeline, such as a polygonal column, for example.

While the slopes in the above embodiment are described as being a first slope and a second slope forming an outward fold or a ridgeline, the slope configuration is not limited to this. For example, the upper surface of the drain pan may be formed as a trapezoidal prism, the upper surface of the prism serving as the main mounting seat.

While the drain holes in the above embodiment are described as being holes formed at lowest positions of the slopes, the drain hole configuration is not limited to this. For example, wall parts may be cut away at lowest positions of the slopes to form drain holes.

While each of the slopes in the above embodiment is a single plane (with a constant inclination angle) and the ridgeline formed by an outward fold is straight, each slope may be a bent plane or a curved surface (with varying inclination angles) as long as there is a downward slope from every adjacent slope toward a drain hole. The ridgeline need not necessarily be straight, and need not necessarily be formed in a clearly visible way.

### [Reference Signs List]

- 100, 200, 300: Drain pan
- 110, 210, 310: Wall
- 111, 311: Slope
- 111a, 311a: First slope
- 111b, 311b: Second slope
- 112: Ridgeline
- 312: Inward fold
- 113, 213, 313: Drain hole
- 113a: First drain hole
- 113b: Second drain hole
- 114, 214, 314: Mounting seat
- 115, 215, 315: Main mounting seat
- 116, 216, 316: Peripheral mounting seat
- 116a: First peripheral mounting seat
- 116b: Second peripheral mounting seat
- 116c: Third peripheral mounting seat
- 117: Parallel line connecting both ends of wide part
- 117a: First parallel line
- 117b: Second parallel line
- 117c: Third parallel line
- B: Pedestal
- C: Transfer path
- M: Production machine
- S: Container filling equipment

## Claims

1. A drain pan provided on an upper surface of a pedestal of a production machine in container filling equipment,
the drain pan comprising at least two slopes,
a drain hole provided at a lowest point of the slopes for discharging waste liquid flowing down from the production machine, and
a wall standing upright along outer peripheral edges of the pan.

2. The drain pan according to claim 1, wherein the plurality of slopes are each inclined downward from an adjacent slope toward the drain hole.

3. The drain pan according to claim 1 or 2, wherein the plurality of slopes are divided by a ridgeline formed by an outward fold.

4. The drain pan according to claim 3, further comprising a mounting seat fixedly attaching a base part of the production machine to the pedestal,
the mounting seat including one that is disposed to extend over the ridgeline.

5. The drain pan according to claim 3 or 4, further comprising a mounting seat fixedly attaching a base part of the production machine to the pedestal,
the mounting seat having an outer side that does not form a concave shape facing the ridgeline where the mounting seat is disposed.

6. The drain pan according to any one of claims 3 to 5, wherein the ridgeline is not parallel to any surface of the wall.

7. The drain pan according to any one of claims 1 to 6, wherein the plurality of slopes have an inclination angle of 3 degrees or more.
